Europäisches Patentamt

European Patent Office

Office européen des brevets

(19)

(11) Publication number: 0 324 644
A2

# EUROPEAN PATENT APPLICATION

(12)

(21) Application number: 89300316.0

(22) Date of filing: 13.01.89

(51) Int. Cl.⁴: G 21 C 17/00

(30) Priority: 15.01.88 US 144118

(43) Date of publication of application:
19.07.89 Bulletin 89/29

(84) Designated Contracting States:
CH DE ES FR IT LI NL SE

(71) Applicant: Egger, Shawn E.
7749 West Dead Creek Rd.,
Baldwinsville New York 13027 (US)

(72) Inventor: Sherman, Harold G.
32 Braeside Road
Baldwinsville New York 13027 (US)

Egger, Shawn E.
7749 West Dead Creek Road
Baldwinsville New York 13027 (US)

(74) Representative: Jackson, Peter Arthur et al
GILL JENNINGS & EVERY 53-64 Chancery Lane
London WC2A 1HN (GB)

(54) Apparatus for movement through a tubular conduit.

(57) Apparatus for remotely controlled movement through
linear and curved sections of a pipe, or other tubular conduit
includes a pair of spaced members (10,12) each carrying a
plurality of extensible and retractable feet (34-40) for movement
into and out of engagement with the interior wall of the pipe and
one or more drive cylinders (22,24) connecting the spaced
members for movement thereof towards and away from one
another. The apparatus carries equipment, such as a TV camera
(52), for inspecting, measuring and/or performing other
operations on the pipe.

EP 0 324 644 A2

**Description**

### APPARATUS FOR MOVEMENT THROUGH A TUBULAR CONDUIT

The present invention relates to apparatus for controlled movement through an elongate tubular conduit and, more specifically, to apparatus capable of remotely controlled, stepped movement through a pipe to perform inspections, measurements and/or other operations within the pipe.

Piping such as that used in nuclear power generating facilities, as well as in other applications, must be inspected prior to use and periodically thereafter to determine whether cracks or flaws are present, e.g., at welded locations, which could indicate an actual or potential hazardous condition. It is desirable that means be provided for transporting inspection apparatus, such as a television camera for performing visual inspections on a remote monitor, through the piping. The transporting apparatus may carry equipment in addition to the camera for assisting in visual or ultrasonic inspection, and/or for performing other operations, such as welding or grinding, within the piping.

US-A-4,675,728 discloses apparatus including a carriage mounted on wheels for movement through the interior of elongate piping to assist in visual inspection thereof. Another form of apparatus, for movement through linear and curved sections of piping to permit visual inspection and other operations to be performed therein, is disclosed in US-A-4,460,920. The latter apparatus includes two stepping mechanisms having parts movable into and out of gripping engagement with the inside walls of the piping, and drive means for axial movement of the two mechanisms through the pipe. The stepping mechanisms are connected by further structure including at least one gimbal-type joint to permit articulated relative movement of the two spaced stepping mechanisms. The axial drive means may comprise an extensible and retractable cylinder and piston connected between one of the stepping mechanisms and the structure carrying the gimbal-type joint which, in any event, is necessary in order to permit movement of the apparatus through curved sections of piping.

In accordance with the invention, apparatus for movement through a conduit comprises first and second stepping members each including a rigid frame disposed about a central axis, friction means attached to the frame and arranged in a circle about the central axis and means for moving the friction means of each stepping member between outwardly extended and inwardly retracted positions with respect to the central axis for frictional engagement with and disengagement from the inside surface of the conduit; and means connecting the first and second stepping members in spaced relation along the central axis, the connecting means comprising at least one extensible and retractable member connected at opposite ends to respective ones of the frames of the first and second stepping members and arranged, by sequential extension and retraction, to move the stepping members selectively axially towards or away from one another, (as disclosed in US-A-4,460,920,); is characterised in that the connection of the extensible and retractable member to at least one of the frames is pivotless but allows a limited amount of play to permit a predetermined, limited amount of rotational relative movement of the frames about axes transverse to the central axis, and the extensible and retractable member having a maximum length of extension and being so constructed and arranged that contact of one of the stepping members, in use, with the conduit interior halts the extension of the extensible and retractable member short of the maximum length and causes the limited amount of rotational movement, whereby the apparatus may travel through curved sections of the conduit.

The apparatus may be moved through a pipe in step fashion by retracting the friction means, e.g. friction feet, of one stepping member while those of the other stepping member are extended and actuating the extensible and retractable member to effect relative axial movement of the stepping members.

The extensible and retractable member may comprise a cylinder having a piston and piston rod movable along a line parallel to the central axis, wherein the cylinder is connected at one end to the first stepping member, and the piston rod extends from the other end of the cylinder and is connected to the second stepping member.

The friction feet may be affixed to the ends of respective piston rods and the means for moving the feet comprise cylinders from which the piston rods extend.

A combination of features permits movement of the apparatus around elbows or through other curved sections of the pipe. The axial drive cylinder may be bolted or otherwise affixed at one end to the frame of one of the stepping members, and the end of the piston rod is attached to the other stepping member with the small amount of looseness or play preferably in the latter connection. This play may be provided by a difference in screw thread diameters of the screw threaded connection.

There may be at least one fixed member attached to the rigid frame adjacent to each of the feet, the fixed member having an edge portion positioned farther from the central axis than the outermost surface of the adjacent foot when the foot is fully retracted, whereby the edge portion will contact the internal surface of the tubular conduit before the adjacent foot when the stepping member is advanced to cause contact.

As the apparatus enters a curved section of the pipe, the extensible member is extended until the fixed member acting as a skid on one side of the forward stepping member contacts the pipe surface. The feet of the forward stepping member are then extended, which may produce some slippage of the friction feet of the rear stepping member on the pipe surface, resulting in some pivoting movement of the apparatus within the pipe. The play in the connection of the extensible and retractable member frame also provides some movement of the apparatus along the curved pipe axis. Repeated movement in small axial increments will result in movement of the apparatus through the curved pipe section.

Rather than using a single, axially extending cylinder connecting the stepping members at their centres, a pair of such cylinders may be arranged in parallel relation on each side of the axial centreline for concurrent operation in effecting relative axial movement of the stepping members. A television camera may then be mounted between the two cylinders, extending along the axial centreline. This arrangement offers the dual advantages of increased rigidity of the overall apparatus, and keeping the television camera in focus as it is scanned around the internal circumference of the pipe.

In the accompanying drawings:-

Figure 1 is a front elevation of one movable inspection apparatus incorporating the features of the present invention, with portions thereof in a second position of movement shown in phantom lines;

Figure 2 is a plan view of the apparatus of Figure 1, with the same portions shown in phantom lines;

Figures 3a-3f are a series of diagrammatic, elevational views showing the sequence of movement of elements of the apparatus in effecting stepped movement through a linear section of piping; and

Figures 4a-4c are a series of diagrammatic, elevational views showing the sequence of movement of the elements as the apparatus travels through a curved section of piping.

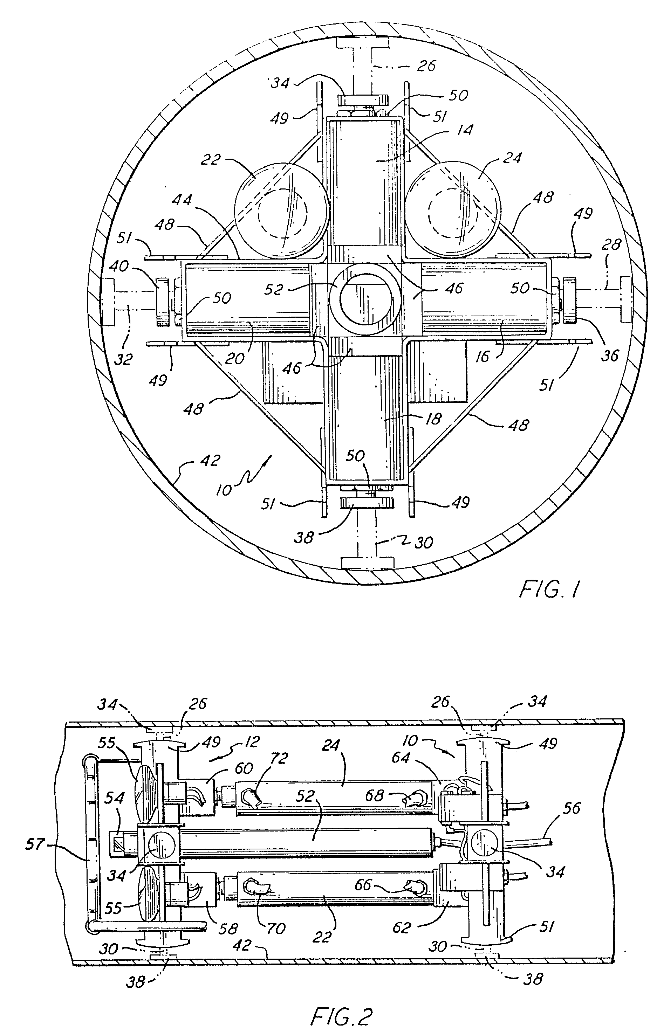

Referring now to the drawings, in Figures 1 and 2 is shown a preferred embodiment of the apparatus, which includes a pair of spaced stepping members, denoted generally by reference numerals 10 and 12, constructed essentially symmetrically about a central axis. Each of stepping members 10 and 12 includes a plurality of double-acting (i.e., dual ended), pneumatic cylinders; four such cylinders, numbered 14, 16, 18 and 20, are shown in the illustrated embodiment, the minimum practical number in any case being three. Two additional double-acting cylinders 22 and 24 extend between and join stepping members 10 and 12, parallel to one another and to the axis between the centers of the spaced members.

Pneumatic cylinders 14, 16, 18, 20, 22 and 24 are of conventional design, each having a piston mounted for reciprocating movement within the cylinder portion, and a rod connected to the piston and extending through one end of the cylinder. Piston rods 26, 28, 30 and 32 are shown in Figure 1 in phantom lines, extending from cylinders 14, 16, 18 and 20, respectively. When so extended, friction feet 34, 36, 38 and 40 on the ends of rods 26, 28, 30 and 32, respectively, engage the inside surface of circular cross-section pipe 42. Each of the cylinders is provided with a fitting connected to a source of pressurized air at both ends, such mechanisms and the controls therefor being conventional and therefore not shown in the present drawings.

Stepping members 10 and 12 include a rigid framework upon which the four cylinders of each member are mounted. The frame of member 10 is seen in Figure 1, that of member 12 being of the same or similar construction. Frame member 44 extends along both sides and over the outer ends of all four cylinders, and is welded or otherwise fixedly attached to four-sided center support 46. Intermediate braces 48 extend diagonally between and are welded to outer end portions of frame member 44. Skids 49 and 51 are also fixedly attached to the outer frame member portions on opposite sides of the outer end of each of cylinders 14, 16, 18 and 20. The outer edges of skids 49 and 51 are curved, as seen in Figure 2, and are positioned farther from the centers of stepping members 10 and 12 (i.e., closer to the pipe wall) than friction feet 34, 36, 38 and 40 when rods 26, 28, 30 and 32 are retracted. Threaded fittings on each of the cylinders extend through openings in the portions of frame member 44 which pass over the ends of the cylinders and are secured by nuts 50. In addition or alternatively to the threaded fittings and nuts, cylinders 14, 16, 18 and 20 may be attached by screws extending through the frame member and into the cylinders.

Television camera 52, of commercially available form, is mounted between members 10 and 12, preferably extending along the central axis between the two so that, as scanning mechanism 54 is rotated to reflect an image of the internal circumference of pipe 42 to the camera lens, there is no need to re-focus, provided the apparatus is centrally positioned in the pipe. Camera 52 is fixedly attached to and movable with stepping member 12, electrical cable 56 for operating, and relaying video signals from, camera 52, extending loosely through the center of stepping member 10. Lamps 55 are mounted on the frame of stepping member 12 to illuminate the interior of the pipe. "Black light" tube 57 may also be mounted on the frame member for visual inspections employing a spray penetrant in the manner described in earlier-mentioned Patent No. 4,675,728. Other items, such as ultrasonic transducers, welding and grinding apparatus, etc., may be carried by the apparatus of the invention, but are not shown since the nature and arrangement thereof are entirely optional.

As also seen in Figure 2, the ends of the piston rods of cylinders 22 and 24 are connected by brackets 58 and 60, respectively, to stepping member 12, whereas the opposite ends of the cylinders are attached by brackets 62 and 64 to stepping member 10. Air from a pressurized source outside pipe 42 is supplied to one end of cylinders 22 and 24 through tubes 66 and 68, respectively, for extending the piston rods, and to the opposite end through tubes 70 and 72 for retracting the rods.

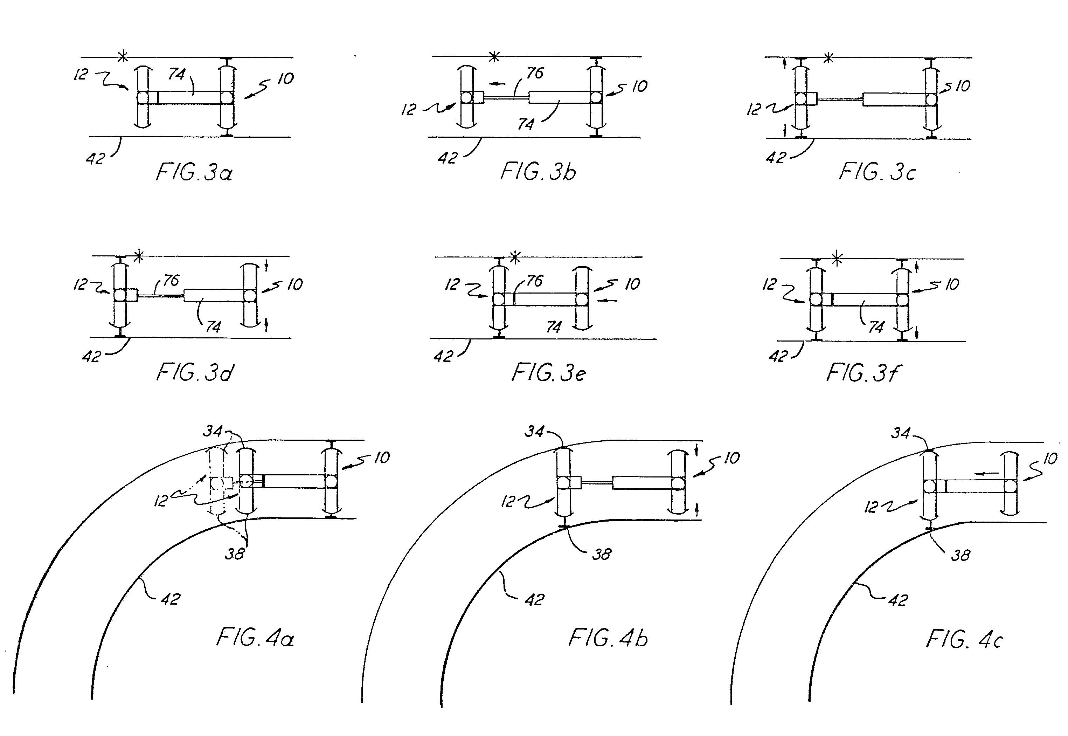

The manner of movement of the apparatus through linear and curved sections of pipe 42 is illustrated in the sequential views of Figures 3a-3f and 4a-4c. In Figure 3a the apparatus is shown with the piston rods of the four cylinders of stepping member 10 extended and those of both the cylinders of stepping member 12 and the axially extending cylinder(s), here denoted by reference numeral 74, retracted. In normal operation the outward force applied by the stepping member cylinders, and the coefficient of friction between the feet on the ends of the operating rods and the inside surface of the pipe, relative to the weight of the apparatus and equipment carried thereby, are such that the portions of the apparatus extending from each stepping member are supported in cantilever fashion when the friction feet of one stepping member are engaged, and those of the other stepping member disengaged, with the pipe surface. That is, the frictional engagement of the feet of one stepping member will normally support the apparatus both when operating rod(s) 76 of axially exteding cylinder(s) 74 is retracted, as in Figure 3a, and when extended, as in Figure 3b.

Rod 76 is extended, moving stepping member 12 to the left, i.e., to the position of Figure 3b. The cylinders of stepping member 12 are then actuated to extend the piston rods thereof, bringing the friction feet into engagement with the inside of pipe 42, as shown in Figure 3c. The piston rods of the stepping member 10 cylinders are retracted, as in Figure 3d, the apparatus then being supported by stepping member 12. Piston rod(s) 76 is then retracted, thereby moving cylinder(s) 74 and stepping member 10 to the right, from the position of Figure 3d to that of Figure 3e. Extension of the piston rods of the cylinders of stepping member 10 brings the elements to the position of Figure 3f, and the steps are then repeated in sequence, resulting in the step-fashion movement of the apparatus through pipe 42.

The same sequence of actuation of the cylinders of stepping members 10 and 12, and of axial drive cylinder(s) 74 is followed in moving the apparatus through a curved section of pipe, denoted in Figures 4a-4c by reference numeral 78. As the apparatus enters the curved section, extension of rod(s) 76 of cylinder(s) 74 moves stepping member 12 from the solid to the dotted line position in Figure 4a. This places skids 49 and 51 on one side of frame member 44 in contact with the interior of pipe section 78, which may occur before full extension of rod(s) 76 of cylinder(s) 74. In any case, the pneumatic force on the piston(s) of cylinder(s) 74 is such that extension of rod(s) 76 stops when substantial resistance is encountered. However, in forcing skids 49 and 51 against the pipe surface, a turning moment is exerted on the apparatus and two things occur which make possible the movement of the apparatus through an elbow or other curved section of pipe. The play or looseness in the connection of the end of piston rod(s) 76 to stepping member 12 permits a small but definite amount of angular movement of stepping member 12 about the axis through its center. Also, the turning moment may cause some slippage of the friction feet on the piston rods of cylinders 14, 16, 18 and 20 of stepping member 10 on the wall of the pipe, permitting additional angular movement of stepping member 12.

Thus, with each extension and retraction of rod(s) 76, some amount of angular movement of stepping members 10 and 12 takes place, permitting the apparatus to travel through a curved pipe section.

The increments of axial travel of the apparatus may be quite small, depending on the radius of pipe curvature, but movement is possible through curved sections of quite small radius. The amount of play in the connection of rod(s) 76 to stepping member 12 may also be quite small; for example, 0.05 to 0.25 mm difference in diameter of threadedly connected members may provide the required amount of relative angular movement of the stepping members.

The length of stroke of the piston of cylinder(s) 74 is proportional to the diameter of the pipe in which the apparatus is to be used and the radius of the curved sections through which it is expected to travel. For example, a unit designed to operate in 6″ diameter pipe may have an axial drive cylinder with a maximum stroke of about one inch, whereas a unit designed to operate in a 10″ or 12″ pipe with curved sections of larger radii may have a maximum stroke as large as 4″. The stroke of the cylinders on the stepping members should be about twice the distance between the outer surfaces of the friction feet and the pipe wall when the cylinders are retracted and the aparatus is centered in the pipe. That is, when the pipe wall on one side is engaged by skids 49 and 51 on one side, the piston rod on that side will extend only to the extent necessary to bring the friction foot even with the skids; accordingly, the cylinder on the opposite side must extend approximately twice as far in order for the friction foot to engage the pipe as when the apparatus is centered therein. This relationship is illustrated in Figures 4a - 4c, as the apparatus travels through curved pipe section 78.

The rigidity of the apparatus and the tight frictional engagement of the feet on the ends of the piston rods of each stepping member with the internal surface of the pipe permit the apparatus to travel both upwardly and downwardly through vertical sections of pipe. Also, the apparatus has no problem in pulling behind it the electric, pneumatic, and any other lines by which various elements of the apparatus are connected to electrical power, compressed air, etc., outside the pipe. The control system is conventional, and is therefore not shown in detail, preferably including solenoid-operated valves for controlling air flow to each end of the stepping member cylinders and the axial drive cylinder.

All four cylinders on each of the stepping members are actuated for simultaneous extension and retraction of the piston rods, and the controls preferably may be selectively actuated either automatically or manually. Although pneumatically operated cylinders are preferred as the means of moving the friction feet into and out of engagement with the pipe surface, solenoid devices with friction feet on the ends of the movable plungers could be substituted, if desired. Furthermore, although at least three friction feet must be provided on each stepping member for movement into and out of engagement with the inside surface of the pipe there is no requirement for an equal number of cylinders, solenoids, or other such actuating members. That is, a lesser number, or even a single, actuating member could be connected through a suitable linkage to move a plurality of friction feet simultaneously toward and away from the pipe surface.

## Claims

1. Apparatus for movement through a tubular conduit (42), the apparatus comprising first and second stepping members (10,12) each including a rigid frame (44) disposed about a central axis, friction means (34-40) attached to the frame and arranged on a circle about the central axis and means (14-20) for moving the friction means of each stepping member between outwardly extended and inwardly retracted positions with respect to the central axis for frictional engagement with and disengagement from the inside surface of the conduit; and means connecting the first and second stepping members in spaced relation along the central axis, the connecting means comprising at least one extensible and retractable member (22,24) connected at opposite ends to respective ones of the frames of the first and second stepping members and arranged, by sequential extension and retraction, to move the stepping members sequentially axially away from and towards one another; characterised in that the connection of the extensible and retractable member to at least one of the frames is pivotless but allows a limited amount of play to permit a predetermined, limited amount of rotational relative movement of the frames about axes transverse to the central axis, and the extensible and retractable member having a maximum length of extension and being so constructed and arranged that contact of one of the stepping members, in use, with the conduit interior halts the extension of the extensible and retractable member short of the maximum length and causes the limited amount of rotational movement, whereby the apparatus may travel through curved sections of the conduit.

2. Apparatus according to claim 1, wherein the or each extensible and retractable member comprises a cylinder (22,24) having a piston and piston rod movable along a line parallel to the central axis, wherein the cylinder (74) is connected at one end to the first stepping member, and the piston (76) rod extends from the other end of the cylinder and is connected to the second stepping member.

3. Apparatus according to claim 2, wherein there are a pair of the cylinders (22,24), each having a piston and a piston rod movable along lines parallel to one another.

4. Apparatus according to any of the preceding claims, wherein the friction means (34-40) are at least three friction feet.

5. Apparatus according to claim 4, wherein the feet (34-40) are affixed to the ends of respective piston rods (26-32) and the means for moving the feet comprise cylinders (14-20) from which the piston rods extend.

6. Apparatus according to claim 5, wherein the cylinders (14-20) are mounted upon the rigid frame (44) of the respective stepping member (10,12) with the piston rods extending radially about the central axis.

7. Apparatus according to claim 5 or claim 6, wherein there are four of the cylinders for each stepping member.

8. Apparatus according to any one of claims 4 to 7, further including at least one fixed member (49,51) attached to the rigid frame (44) adjacent to each of the feet (34-40), the fixed member having an edge portion positioned farther from the central axis than the outermost surface of the adjacent foot when the foot is fully retracted, whereby the edge portion will contact the internal surface of the tubular conduit before the adjacent foot when the stepping member is advanced to cause contact.

9. Apparatus according to claim 8, wherein the fixed member comprises a pair of plate-like members (49-51) affixed to the rigid frame (44) of each stepping member and positioned on opposite sides of each foot.

10. Apparatus according to any of the preceding claims, wherein the connection of the extensible and retractable member to at least one of the frames is a screw threaded connection, and the limited amount of play is provided by a difference in screw thread diameters of the screw threaded connection.

11. Apparatus according to claim 9, wherein the difference in the screw thread diameters is of the order of 0.05 to 0.25 mm.

FIG. 1

FIG.2

FIG. 3a

FIG. 3b

FIG. 3c

FIG. 3d

FIG. 3e

FIG. 3f

FIG. 4a

FIG. 4b

FIG. 4c